# EUROPÄISCHE PATENTSCHRIFT

(11) **EP 0 830 617 B1**
(45) Veröffentlichungstag und Bekanntmachung des Hinweises auf die Patenterteilung: **13.01.1999**
(21) Anmeldenummer: 96919618.7
(22) Anmeldetag: 31.05.1996
(51) Int. Cl.: G01S 13/02, G01L 1/16

(54) **ABFRAGEGERÄT FÜR PASSIVE RESONATOREN ALS FREQUENZANALOGE SENSOREN MIT FUNKREGELUNG**
SCANNER FOR PASSIVE RESONATORS AS FREQUENCY-ANALOG SENSORS WITH RADIO CONTROL
INTERROGATEUR POUR RESONATEURS PASSIFS SOUS FORME DE CAPTEURS DE FREQUENCE ANALOGIQUES AVEC REGULATION RADIO

(30) Priorität: 06.06.1995 DE 29509278 U; 13.05.1996 DE 19619311
(43) Veröffentlichungstag der Anmeldung: 25.03.1998
(73) Patentinhaber: SIEMENS AKTIENGESELLSCHAFT, 80333 München (DE)
(72) Erfinder: MICHEL, Jürgen, D-81827 München (DE); GROSSMANN, Rainer, D-80796 München (DE)
(86) Internationale Anmeldenummer: DE9600956
(87) Internationale Veröffentlichungsnummer: WO9639639

(56) Entgegenhaltungen:
- SENSORS AND ACTUATORS A, Bd. A44, Nr. 3, 1.September 1994, Seiten 231-239, XP000483967 SEIFERT F ET AL: "MECHANICAL SENSORS BASED ON SURFACE ACOUSTIC WAVES"
- IEEE 1987 ULTRASONICS SYMPOSIUM PROCEEDINGS, Bd. 1, 14.Oktober 1987, DENVER, COLORADO, Seiten 583-585, XP002014480 BAO ET AL.: "SAW temperature sensor and remote reading system"
- TECHNISCHES MESSEN ATM, Bd. 62, Nr. 9, September 1995, MUNCHEN DE, Seiten 342-345, XP000527993 MICHEL: "Dehnungsmessung mit funkabfragbaren OFW-Resonatoren"

## Beschreibung

Die Erfindung betrifft ein Abfragegerat nach dem Prinzip der Phasenregelung zum Abfragen und Auswerten frequenzanaloger Sensorsignale eines Resonators als Sensor, der mit einer Antenne über eine Funkstrecke an eine Auswerteeinheit gekoppelt ist.

Derzeit werden Quarzresonatoren (Dickenscherschwinger oder Oberflächenwelle-Bauelemente) als Sensoren zur Messung von Temperatur, Kraft, Drehmoment, Druck, Beschleunigung, Strom, Spannung usw. eingesetzt. Berechnungen und Simulationen zur optimalen Auslegung von Quarzschwingern sind bekannt. Aufgrund des piezoelektrischen Effektes ist es möglich, in Quarzelementen Energie zu speichern. Üblicherweise betreibt man diese Sensoren als frequenzbestimmendes Element in einer Oszillatorschaltung. Ein auf diesem Prinzip basierendes Meßsystem zur Drehmomentmessung ist ebenfalls bekannt. Die Frequenzanderung in bezug auf einen Referenzresonator enthält die Information über die Meßgröße. Solche aktiven Schaltungen benötigen eine Stromversorgung.

Weiterhin ist bekannt, daß Quarzbauelemente über Funk abgefragt werden können. Seit Jahrzehnten arbeiten Identifizierungsmarken, die über Funk die Anwesenheit bzw. Identität von Objekten ermöglichen, auf der Basis von Quarzen (ID-Tags). Hierbei wird der Quarz über Funk mit Energie versorgt, die zwischengespeichert und reflektiert wird. Das reflektierte Signal enthält ein tagspezifisches Codewort. Ein solches System besteht prinzipiell aus einer Abfrageeinheit und passiven ID-Tags mit einer Antenne. Beschrieben ist dies z. B. in den US-PS 3273146, 4725841.

Bei einem weiteren bekannten Meßverfahren über Funk werden Oberflächenwellen-Resonatoren als frequenzanaloge Sensoren mit kurzen HF-Pulsen angeregt. Nach dem Abschalten der Anregung schwingt der Resonator bei seiner Eigenfrequenz weiter. Aufgrund der Verluste des Resonanzkreises einschließlich der Abstrahlung durch die Antenne nimmt die Amplitude der Eigenschwingung exponentiell ab. Je nach Größe der Dämpfung ist das Signal eventuell nur sehr kurze Zeit verfügbar, bis es sich vom Rauschen nicht mehr abhebt. Dadurch wird die Auflösung der Meßgröße stark begrenzt. Ein solches Verfahren ist z.B. in SENSORS AND ACTUATORS A, Bd. A 44, Seiten 231-239, von F. Seifert et al.: "Mechanical Sensors based on surface acoustic waves" beschrieben.

Aufgabe der vorliegenden Erfindung ist es, Signale von als Funksensoren eingesetzten Resonatoren auf einfache Weise, schnell und mit hoher Auflösung auszuwerten.

Will man die Auflösung erhöhen, indem man über mehrere Sendeperioden mittelt und auf diese Weise das Rauschen reduziert, kommt man um eine digitale Verarbeitung nicht herum und man kann die Signale nur sehr langsam auswerten.

Denkbare digitale Auswerteverfahren ohne Phasenregelung verwenden z. B. die (Diskrete) Fourier-Transformation oder die Ausgleichsrechnung, um aus dem Antwortsignal die Eigenfrequenz zu bestimmen. Solche Methoden benötigen einen hohen Aufwand an Schaltungstechnik und Ressourcen.

Um das Sensorsignal kontinuierlich verfügbar zu machen, wird erfindungsgemäß die Frequenz der Sendestufe als Frequenz der Sensorantwort nachgeführt. Dies geschieht nach dem an sich bekannten Prinzip der Phasenregelschleife (phase locked loop, PLL): Der Sendeoszillator ist als spannungsabhängiger Oszillator (voltage controlled oscillator, VCO) ausgelegt, der über ein Regelfilter von einem Phasen- oder Frequenzkomparator gesteuert wird. Der entsprechende Komparator stellt eine Verknüpfung zwischen der Sendefrequenz und der empfangenen Sensorfrequenz her.

Im Falle des Phasenkomparators wird nach dem Einrasten die Sendefrequenz mit der Antwortfrequenz identisch sein (eventuell bis auf einen Phasenwinkel). Es ist auch möglich mit Hilfe eines Frequenzkomparators die Sendefrequenz auf eine feste Differenzfrequenz bezüglich des Antwortsignals zu regeln.

Zur Auswertung der Meßgröße kann nun entweder die nachgeführte Sendefrequenz bestimmt oder direkt die Regelgröße (Spannung am Ausgang des Regelfilters) gemessen werden. Es empfiehlt sich, abhangig von der Regeldifferenz die Pulsweite des Anregungssignals zu verändern. Je kleiner z. B. die Frequenzdifferenz zwischen Anregung und Eigenfrequenz des Sensors ist, desto länger kann der Anregungspuls sein um den Sensor mit mehr Energie zu versorgen. Trotzdem kann der Sensor noch sicher angeregt werden.

Obwohl die Messung hochgenau ist - da die Sensorantwort bei einer statischen Messung über beliebig viele Anregungsperioden ausgewertet wird -, benötigt man keinen komplizierten Aufbau und kann auf eine aufwendige digitale Signalverarbeitung verzichten. Der sensorseitige Teil des Aufbaus ist unkompliziert und daher wenig störanfällig. Im Vergleich zu einem digitalen Auswerteverfahren erreicht man mit dem hier beschriebenen Verfahren höhere Auswertegeschwindigkeiten. Durch eine Modulation der Pulsweite, die erst bei einer Frequenznachführung Sinn macht, erreicht man einen höheren Signal-Störabstand.

Der als Sensor verwendete Resonator sollte vorteilhafterweise eine hohe Güte besitzen. Hier eignen sich besonders Quarze bzw. Quarzkeramiken. Günstigerweise werden mindestens zwei solche Sensoren räumlich miteinander vereinigt in einem Meßsystem eingesetzt. Damit können im Auswertegerät Anteile des Sensorsignals, die von äußeren Störgrößen verursacht werden, kompensiert werden. Vorteilhafterweise ist eine mit dem Resonator verbundene Antenne vorgesehen, über die das Signal abgestrahlt wird. Statt eine herkömmliche Antenne zu verwenden, kann man eine schmalbandige Antenne mit Richtwirkung einsetzen. Der Abstand, über den das abgestrahlte Signal in zuverlässiger Weise empfangen werden kann, ist - abgesehen von der Antenne - von den elektrischen Verhältnissen der Umgebung sowie den materiellen und geometrischen Eigenschaften des Sensors abhängig.

Die Auswerteeinheit muß über einen gesteuerten Oszillator verfügen, der allen möglichen Eigenfrequenzänderungen des Sensors folgen kann. Das Sendesignal wird regelmäßig unterbrochen - bzw. auf eine andere Frequenz umgeschaltet, wenn ein Referenzsensor vorhanden ist -, um dem Sensor das Schwingen bei seiner Eigenfrequenz zu erlauben. Beim Einrasten des Regelkreises ist die Differenz aus Sende- und Empfangsfrequenz gleich einer festen, vorgegebenen Frequenz.

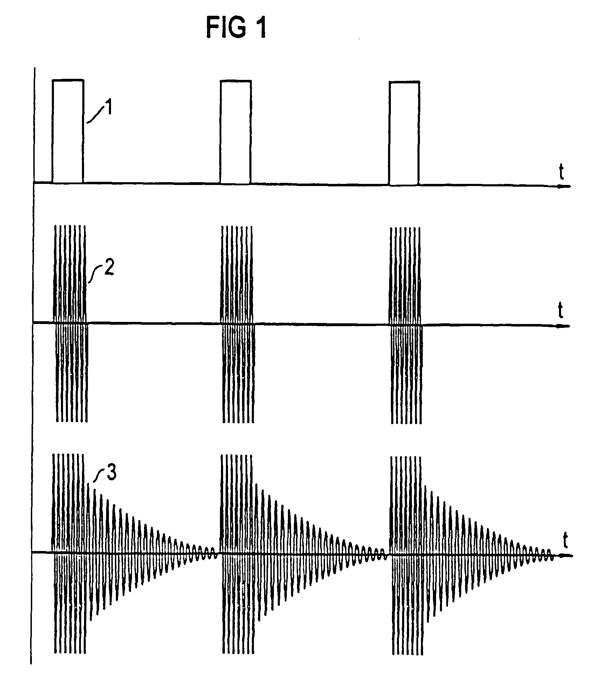

Figur 1 zeigt einen Takt 1, ein Abfragesignal 2 sowie eine exponentiell abklingende Antwort 3 eines OFW-Resonators als funkabfragbarer Dehnungssensor. Ändert sich die mechanische Belastung des Sensors, so ändert sich seine Resonanzfrequenz und somit die Frequenz der Antwort 3.

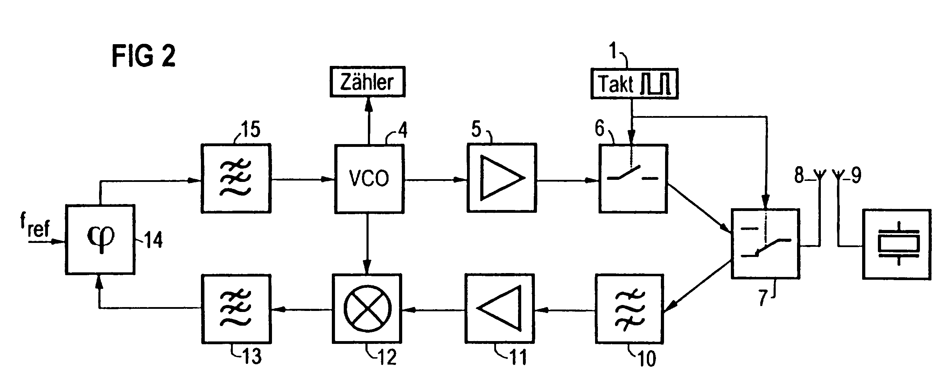

Figur 2 zeigt das Blockschaltbild des Meßsystems in der Ausführung mit einem OFW-Resonator als Sensor. Die von einem spannungsgesteuerten Oszillator (VCO) 4 erzeugte Trägerfrequenz wird zunächst in einem Verstärker 5 verstärkt und durch einen Schalter 6 moduliert. Über eine Endstufe und eine Sende-/Empfangsweiche 7 wird damit eine Antenne 8 gespeist. Der Sensor empfängt das Sendesignal über eine sensoreigene Antenne 9 und reflektiert als Antwort eine exponentiell abklingende Eigenschwingung. Diese wird wieder von der Antenne 8 empfangen und gelangt über die Sende-/Empfangsweiche 7 zu einem Bandpaß 10. Anschließend wird das Signal in einem Verstärker 11 verstärkt. Dann wird es mit einem Mischer 12, der vom VCO gesteuert wird, in ein Tiefpaßsignal 13 umgesetzt und einem Frequenzdiskriminator 14 zugeführt. Dieser liefert eine zur Frequenzdifferenz zwischen Tiefpaßsignal und dem Referenzsignal proportionale Ausgangsspannung, die zur Regelung des VCO über ein Schleifenfilter 15 läuft. Ändert sich die Resonanzfrequenz des Resonators, so folgt ihr die Frequenz des VCOs, die mit einem Frequenzzähler gemessen wird.

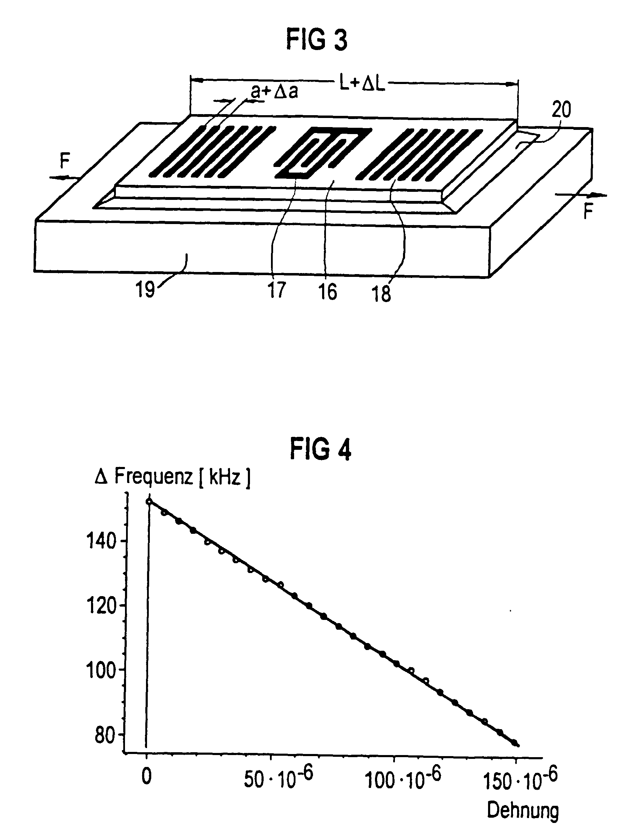

Der grundsätzliche Aufbau eines OFW-Resonators als Dehnungssensor ist in Figur 3 dargestellt. Es sind der eigentliche Sensor bestehend aus einem Quarzsubstrat 16, einem Interdigitalwandler 17 und Reflektoren 18 ohne Antenne dargestellt, der auf ein Meßobjekt 19 geklebt ist. Wird das Meßobjekt gedehnt oder gestaucht, so überträgt eine Klebung 20 die Dehnung auf den Sensor, der seine Resonanzfrequenz ändert.

Verwendet man einen OFW-Resonator auf Quarzsubstrat (ST-Quarzsubstrat) als Dehnungssensor, so ergibt sich eine lineare Änderung der Resonanzfrequenz von der Dehnung. In Figur 4 ist die Kennlinie eines solchen passiven Funksensors dargestellt.

## Patentansprüche

1. Vorrichtung zur Auswertung von als frequenzanalogen Sensoren eingesetzten Resonatoren,
- wobei der Sensor über elektromagnetische, induktive oder kapazitive Kopplung oder direkt über eine Leitung von einem Anregungssignal zum Schwingen bei seiner Eigenfrequenz angeregt wird und
- die Frequenz des Anregungssignals der Eigenfrequenz des Sensors unter Einsatz eines Regelkreises nachgeführt wird, so daß die Differenz zwischen Anregungsfrequenz und Eigenfrequenz des Sensors konstant ist.

2. Vorrichtung nach Anspruch 1 mit mindestens einem Sensorelement und einem Referenzelement für die Referenzfunktion.

3. Vorrichtung nach einem der Ansprüche 1 bis 2 unter Verwendung von Oberflächenwellen-Bauelementen als Sensoren.

4. Vorrichtung nach einem der Ansprüche 1 bis 2 unter Verwendung von Volumenwellen-(Quarz-)Elementen als Sensoren.

5. Vorrichtung nach einem der Ansprüche 1 bis 4, wobei die Sensoren auf das zu vermessende Bauelement aufgeklebt sind.

6. Vorrichtung nach einem der Ansprüche 1 bis 4, wobei die Sensoren in eine mechanische Einspannung zur Übertragung von Kräften geklebt sind.

7. Vorrichtung nach einem der Ansprüche 1 bis 6, wobei die geregelte Frequenz des Anregungssignals ausgewertet wird.

8. Vorrichtung nach einem der Ansprüche 1 bis 6, wobei die Stellgröße des Regelkreises ausgewertet wird.

9. Vorrichtung nach einem der Ansprüche 1 bis 8 mit mehreren Anregungsfrequenzgeneratoren und ebenso vielen Sensoren, wobei die Nachführung über eine Umschaltung jederzeit nur für einen Anregungsfrequenzgenerator geschieht.

10. Vorrichtung nach einem der Ansprüche 1 bis 9, wobei der Temperatureinfluß auf die Sensoren kompensiert wird.

11. Vorrichtung nach einem der Ansprüche 1 bis 9, wobei das Anregungssignal aus unterschiedlich langen Wechselsignalpulsen besteht.

## Claims

1. Apparatus for evaluating resonators which are used as frequency-analog sensors,
- the sensor being excited to oscillate at its natural frequency via electromagnetic, inductive or capacitive coupling or directly via a line from an excitation signal, and
- the frequency of the excitation signal is slaved to the natural frequency of the sensor using a control loop, such that the difference between the excitation frequency and the natural frequency of the sensor is constant.

2. Apparatus according to Claim 1 having at least one sensor element and one reference element for the reference function.

3. Apparatus according to one of Claims 1 or 2 using surface acoustic wave components as sensors.

4. Apparatus according to one of Claims 1 or 2 using volume wave (crystal) elements as sensors.

5. Apparatus according to one of Claims 1 to 4, the sensors being bonded onto the component to be measured.

6. Apparatus according to one of Claims 1 to 4, the sensors being bonded into a mechanical clamping means in order to transmit forces.

7. Apparatus according to one of Claims 1 to 6, the controlled frequency of the excitation signal being evaluated.

8. Apparatus according to one of Claims 1 to 6, the manipulated variable of the control loop being evaluated.

9. Apparatus according to one of Claims 1 to 8, having a plurality of excitation frequency generators and the same number of sensors, the slaving being carried out via a changeover means for only one excitation frequency generator at any time.

10. Apparatus according to one of Claims 1 to 9, the temperature influence on the sensors being compensated for.

11. Apparatus according to one of Claims 1 to 9, the excitation signal comprising alternating signal pulses of different lengths.

## Revendications

1. Dispositif d'évaluation de résonateurs utilisés comme capteurs de fréquence analogiques,
- le capteur étant excité par couplage électromagnétique, inductif ou capacitif ou directement au moyen d'une ligne par un signal d'excitation pour vibrer à sa propre fréquence, et
- la fréquence du signal d'excitation de la fréquence propre du capteur étant alignée en utilisant un circuit de régulation, si bien que la différence entre la fréquence d'excitation et la fréquence propre du capteur est constante.

2. Dispositif selon la revendication 1 comportant au moins un élément capteur et un élément de référence pour la fonction de référence.

3. Dispositif selon l'une des revendications 1 à 2 utilisant des composants à ondes de surface comme capteurs.

4. Dispositif selon l'une des revendications 1 à 2 utilisant des éléments (à quartz) à ondes volumiques comme capteurs.

5. Dispositif selon l'une des revendications 1 à 4, les capteurs étant collés sur le composant à mesurer.

6. Dispositif selon l'une des revendications 1 à 4, les capteurs étant collés dans un dispositif mécanique de fixation pour la transmission de forces.

7. Dispositif selon l'une des revendications 1 à 6, la fréquence régulée du signal d'excitation étant évaluée.

8. Dispositif selon l'une des revendications 1 à 6, la grandeur de réglage du circuit de régulation étant évaluée.

9. Dispositif selon l'une des revendications 1 à 8, comportant plusieurs générateurs de fréquence d'excitation et autant de capteurs, l'alignement s'effectuant à tout moment par commutation uniquement pour un générateur de fréquence d'excitation.

10. Dispositif selon l'une des revendications 1 à 9, l'influence de la température sur les capteurs étant compensée.

11. Dispositif selon l'une des revendications 1 à 9, le signal d'excitation étant constitué d'impulsions de signaux alternatifs de différentes longueurs.
